(19) **Europäisches Patentamt European Patent Office Office européen des brevets**

(11) **EP 3 423 345 B1**

(12) **FASCICULE DE BREVET EUROPEEN**

(45) Date de publication et mention de la délivrance du brevet:
**26.10.2022 Bulletin 2022/43**

(21) Numéro de dépôt: **17702139.1**

(22) Date de dépôt: **02.02.2017**

(51) Classification Internationale des Brevets (IPC):
**B63B 35/44** *(2006.01)*     **F16F 15/023** *(2006.01)*
**F16F 7/10** *(2006.01)*     **F03D 13/25** *(2016.01)*

(52) Classification Coopérative des Brevets (CPC):
**B63B 35/44; F03D 13/25; F16F 7/1034;**
**F16F 15/023;** B63B 2035/446; F05B 2240/93;
F05B 2240/95; Y02E 10/72; Y02E 10/727

(86) Numéro de dépôt international:
**PCT/EP2017/052294**

(87) Numéro de publication internationale:
**WO 2017/148647 (08.09.2017 Gazette 2017/36)**

(54) **SYSTEME DE STABILISATION, EN PARTICULIER POUR UN SUPPORT FLOTTANT, AVEC AU MOINS TROIS RESERVES DE LIQUIDE RELIEES ENTRE ELLES**

STABILISIERUNGSSYSTEM, INSBESONDERE FÜR EINEN SCHWIMMENDEN TRÄGER, MIT MINDESTENS DREI MITEINANDER VERBUNDENEN FLÜSSIGKEITSRESERVEN

STABILISATION SYSTEM, IN PARTICULAR FOR A FLOATING SUPPORT, COMPRISING AT LEAST THREE INTERCONNECTED LIQUID RESERVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2016 FR 1651746**

(43) Date de publication de la demande:
**09.01.2019 Bulletin 2019/02**

(73) Titulaire: **IFP Energies nouvelles**
**92500 Rueil-Malmaison (FR)**

(72) Inventeurs:
• **LEPREUX, Olivier**
**69007 Lyon (FR)**

• **COUDURIER, Christophe**
**69007 Lyon (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
WO-A1-2009/043547     WO-A1-2015/048147
JP-A- 2000 018 319     NL-A- 280 007
US-A1- 2014 339 828

**Description**

La présente invention concerne le domaine des supports flottants en mer (« offshore ») en particulier pour les éoliennes offshore, le domaine des supports posés en mer, en particulier pour les éoliennes offshore posées, et le domaine du génie civil, en particulier pour des gratte-ciels ou des ponts.

Dans le cas des éoliennes offshore, le support flottant supporte, en partie émergée, l'éolienne composée des pales, du rotor, de la nacelle et du mat fixé sur le support flottant. Ces supports flottants peuvent être ancrés au sol marin par des lignes d'ancrage tendues, semi-tendues ou des lignes d'ancrage caténaires. Le support flottant a pour but d'apporter la flottabilité et la stabilité de l'éolienne, de manière à reprendre les efforts exercés sur celle-ci, tout en limitant les mouvements de l'ensemble.

Divers supports flottants dédiés à l'installation d'éoliennes de plusieurs mégawatts au large des côtes sont en cours de développement dans de nombreux pays. Selon la profondeur du site considéré, plusieurs options de conception sont envisageables. Malgré leur grande diversité, plusieurs familles de support flottant se dégagent. On peut citer :

- les flotteurs de type SPAR, caractérisés par une forme géométrique élancée, et comportant un ballast important afin d'abaisser au maximum le centre de gravité de l'ensemble de la structure, et ainsi d'assurer la stabilité,
- les flotteurs de type barge : ce sont des supports à faible tirant d'eau et très large. Leur stabilité est assurée par leur large surface de flottaison. Cependant ce type de support est très sensible à la houle,
- les supports de type TLP (de l'anglais « Tension Leg Platform » qui peut être traduit par plateforme à lignes tendues), qui ont la particularité d'être amarrés au fond de la mer par des lignes tendues garantissant la stabilité de la structure, et
- les flotteurs de type semi-submersible : ce sont des supports constitués d'au moins trois flotteurs reliés par des bras afin d'en assurer la rigidité. Ces supports ont en général un faible déplacement, et présentent une inertie de la surface de flottaison importante, leur procurant ainsi un couple de redressement suffisant à leur stabilité. De plus, ce type de flotteur est moins sensible à la houle que les barges.

Les supports flottants peuvent également être utilisés dans d'autres domaines que l'installation d'éolienne offshore (en mer), par exemple pour des moyens de production d'hydrocarbures, des systèmes houlomoteurs (convertisseur d'énergie de la houle en énergie mécanique ou électrique)...

Afin de permettre l'amortissement du mouvement causé par les vagues, différentes solutions d'amortissement ont été envisagées pour ces flotteurs.

Selon une première solution, l'amortissement peut être réalisé par un système de ballastage avec un « tube en U » comprenant un liquide pouvant se déplacer entre les deux branches verticales du U. Cette solution est décrite notamment dans le document :
C. Coudurier, O. Lepreux, and N. Petit, Passive and semi-active control of an offshore floating wind turbine using a tuned liquid column damper, in Proc. of 10th IFAC Conférence on Manoeuvring and Control of Marine Craft, MCMC, 2015.

On connait également les demandes de brevet US 2014/339828 A1, WO 2015/048147 A1 et NL 280 007 qui concernent des systèmes avec des tubes en U pour plateformes flottantes.

Toutefois, cette solution permet uniquement d'amortir les mouvements causés par la houle selon une unique direction. En effet, pour des vagues dont la direction n'est pas parallèle au « tube en U », le mouvement n'est pas amorti. Or, en mer, la direction de la houle est variable dans le temps, par conséquent la houle n'est pas constamment parallèle au « tube en U ».

En outre, le problème de stabilité se pose également dans d'autres domaines, par exemple pour les structures posées en mer (notamment pour les éoliennes posées) qui sont soumises aux sollicitations causées la houle, mais aussi pour des structures du domaine du génie civil (immeubles, ponts) qui peuvent être soumis à des sollicitations causées par le vent ou par un séisme...

Ainsi, la présente invention concerne un support flottant comprenant au moins un flotteur et un système de stabilisation d'un système soumis à des sollicitations extérieures, le système de stabilisation comportant au moins trois réserves de liquide et au moins trois tubes de liaison. Les réserves de liquide sont réparties spatialement (ne sont pas situés dans un unique plan). De plus, les tubes de liaison assurent la circulation libre du liquide entre toutes les réserves de liquide. Ainsi, le liquide peut se déplacer dans toutes les directions, pour amortir des excitations, quelle que soit la direction de la houle.

**Le système selon l'invention**

L'invention concerne un support flottant comprenant au moins un flotteur et un système de stabilisation, comprenant au moins trois réserves de liquide et au moins trois tubes de liaison, lesdites réserves de liquide étant réparties de telle sorte que, en vue de dessus, les centres desdites réserves de liquide sont disposés sur au moins deux droites distinctes, et lesdits tubes de liaison reliant lesdites réserves de liquide pour une circulation dudit liquide entre lesdites réserves de liquide. Lesdits tubes de liaison relient toutes lesdites réserves de liquide entre elles.

Selon l'invention, au moins un desdits tubes de liaison comportent des moyens de restriction actifs de passage dudit liquide.

Avantageusement, lesdits tubes de liaison forment une étoile ou un polygone, de préférence un polygone régulier, les sommets de ladite étoile ou dudit polygone étant formés par lesdites réserves de liquide, et les arrêtes de ladite étoile ou dudit polygone étant formées par lesdits tubes de liaison.

Conformément à une variante de réalisation, ledit système de stabilisation comporte une réserve de liquide au centre de ladite étoile ou dudit polygone.

Selon l'invention, lesdites réserves dudit liquide comportent un gaz dans leurs parties supérieures.

De plus, ledit système de stabilisation comporte au moins une conduite de passage dudit gaz reliant au moins deux réserves de liquide.

De préférence, lesdites conduites de passage du gaz sont parallèles auxdits tubes de liaison.

Selon une conception, au moins une conduite de passage de gaz comporte des moyens de restriction du passage du gaz.

Selon l'invention, au moins une réserve de liquide comporte une connexion avec un gaz du milieu extérieur.

Conformément à un mode de réalisation, lesdites réserves de liquide ont sensiblement une forme cylindrique.

Selon une caractéristique, ledit système de stabilisation comporte entre trois et huit réserves de liquide.

Selon l'invention, lesdits tubes de liaison sont agencés au niveau de la partie inférieure desdites réserves de liquide.

Selon une mise en œuvre, lesdits tubes de liaison sont sensiblement horizontaux.

Selon un mode de réalisation, ledit support flottant comporte au moins trois flotteurs, chaque flotteur comportant une réserve de liquide dudit système de stabilisation.

De plus, l'invention concerne un système de production d'énergie en mer, comportant une éolienne et un support flottant selon l'une des caractéristiques précédentes.

**Présentation succincte des figures**

D'autres caractéristiques et avantages du système selon l'invention, apparaîtront à la lecture de la description ci-après d'exemples non limitatifs de réalisations, en se référant aux figures annexées et décrites ci-après.

La figure 1 illustre un système de stabilisation selon un premier mode de réalisation de l'invention.
Les figures 2a à 2d illustrent des variantes du premier mode de réalisation.
La figure 3 illustre un système de stabilisation selon un deuxième mode de réalisation de l'invention.
Les figures 4a à 4d illustrent des variantes du deuxième mode de réalisation.
Les figures 5a à 5f illustrent différents modes de réalisation du système de stabilisation selon l'invention.

La figure 6 est une courbe représentant l'amplitude de déplacement d'un flotteur pour un système selon l'art antérieur, et pour un flotteur selon l'invention, pour différents angles d'incidence de la houle.
Les figures 7a et 7b illustrent l'orientation de la houle pour l'exemple de la figure 6.

**Description détaillée de l'invention**

La présente invention concerne un support flottant comprenant au moins un flotteur et un système de stabilisation pour un système pouvant être soumis à des sollicitations extérieures. Le système de stabilisation comporte au moins trois réserves de liquide, et au moins trois tubes de liaison. Les réserves de liquide sont réparties de manière tridimensionnelle (spatialement), c'est-à-dire que, en vue de dessus, le centre des réserves de liquide sont disposés sur au moins deux droites distinctes. Ainsi, les réserves de liquide sont réparties selon au moins deux plans distincts. En d'autres termes, les réserves de liquide ne sont pas situées dans un unique plan, ce qui correspondrait en vue de dessus à un alignement des centres des réserves de liquide sur une unique droite. Cette répartition tridimensionnelle permet d'amortir les mouvements du support flottant pour toutes les directions de la houle. Les tubes de liaison relient les réserves de liquide, permettant ainsi la circulation libre du liquide entre les réserves de liquide. Selon l'invention, les tubes de liaison relient toutes les réserves de liquide entre elles. En d'autres termes, le liquide peut se déplacer librement et de manière dynamique (c'est-à-dire sans être commandé, et sans apport d'énergie extérieure) d'une réserve vers n'importe quelle autre réserve du système de stabilisation. Cette particularité permet d'optimiser l'amortissement multidirectionnel, grâce à un système dynamique permettant d'amortir les sollicitations dynamiques. De plus, cette caractéristique permet également un coût réduit par l'utilisation d'un seul système d'amortissement au sein d'un système flottant, et une limitation de l'encombrement des réserves de liquide, et une adaptation aisée à la géométrie du support flottant (pas forcément possible avec des tubes en U classiques). Les tubes de liaison peuvent relier des réserves de liquide adjacentes, et/ou relier une réserve de liquide à une réserve de liquide centrale, et/ou relier une réserve de liquide à un autre tube de liaison.

Le système pouvant être soumis à des sollicitations est un support flottant soumis à des sollicitations causées par la houle.

Avantageusement, le liquide utilisé est de l'eau, par exemple de l'eau de mer. Toutefois, le liquide peut être de tout type, en particulier un liquide qui ne pollue pas ou peu l'eau du milieu ambiant en cas de fuite.

Les tubes de liaison sont situés dans la partie inférieure (au niveau de la base) des réserves de liquide, de manière à favoriser le déplacement du liquide entre les réserves de liquide.

De plus, les tubes de liaison peuvent être sensiblement horizontaux, limitant ainsi le déplacement du liquide par gravité.

Dans la suite de la description et pour les revendications, les termes vagues, flots marins, et houle sont considérées comme équivalents.

Conformément à un mode de réalisation de l'invention, les tubes de liaison peuvent former une étoile ou un polygone. Dans ce cas, des réserves de liquide forment les sommets de l'étoile ou du polygone, et les tubes de liaison forment les arrêtes de l'étoile ou du polygone. Le choix d'un polygone ou d'une étoile se fait notamment pour s'adapter à l'architecture du support flottant. Typiquement pour un support flottant du type semi-submersible, on peut faire en sorte que les réservoirs soient localisés au niveau des flotteurs de la structure semi-submersible, et que les tubes de liaison soient supportés par les bras reliant les flotteurs. Ces bras pouvant être en étoile ou en polygone, on peut adapter le système de stabilisation en conséquence.

La conception « en étoile » permet l'utilisation de tubes de liaison plus courts. La conception « en polygone » permet une conception plus aisée en évitant les connexions entre tubes de liaison.

Par exemple, l'étoile peut avoir de trois à six branches. En outre, l'étoile peut avoir une réserve de liquide en son centre. Lorsque les tubes de liaison forment un polygone, le polygone est de préférence un polygone régulier, permettant ainsi une répartition équilibrée du liquide, favorisant l'amortissement tridimensionnel du support flottant. Par l'exemple, le système de stabilisation peut comprendre trois réserves de liquide, reliées par des tubes de liaison formant un triangle, de préférence un triangle équilatéral. Selon un autre exemple, le système de stabilisation peut comporter quatre réserves reliées par quatre tubes de liaison formant un quadrilatère, de préférence un losange, et de manière très préférée un carré. Le polygone peut également être un pentagone, un hexagone, un octogone (avec huit réserves de liquide), etc.

Conformément à une mise en œuvre de l'invention, au moins un tube de liaison peut être en acier, en matériau composite, en matière plastique, en béton, ou tout matériau analogue.

Selon l'invention, au moins un tube de liaison, et de préférence tous les tubes de liaisons, comporte des moyens de restriction de passage du liquide. Les moyens de restriction du passage du liquide permettent de ralentir le flux libre qui les traverse, de manière à optimiser l'amortissement apporté par le système stabilisateur. Ces moyens de restriction du passage du liquide sont actifs. Les moyens de restriction actifs permettent d'améliorer les performances d'amortissement. Les moyens de restriction actifs n'ont pas pour but d'entraîner le déplacement du liquide, mais, au contraire, les moyens de restriction actifs ont uniquement pour but d'entraver/limiter partiellement la circulation libre du liquide. Les moyens de restriction peuvent être formés par exemple par une réduction du diamètre du tube localement, par une vanne, des pompes, ou des compresseurs, etc. Le réglage de cette restriction permet de régler certaines caractéristiques du système d'amortissement.

Les réserves de liquide peuvent être de différentes formes. Ainsi, elles peuvent être adaptées à différentes formes de support flottant. Selon une conception préférée de l'invention, les réserves de liquide ont sensiblement une forme cylindrique. On peut alors désigner les réserves de liquide par le terme colonne.

Conformément à une mise en œuvre de l'invention, au moins une réserve de liquide peut être en acier, en matériau composite, en matière plastique, en béton, ou tout matériau analogue.

Selon l'invention, la partie inférieure des réserves de liquide comporte le liquide, et la partie supérieure comporte un gaz, notamment de l'air. Selon une première conception, les réserves de liquide peuvent échanger librement du gaz avec le milieu extérieur.

De plus, le système de stabilisation peut comprendre des conduites de passage du gaz reliant les réserves de liquides. Les réserves de liquide peuvent être alors isolées de l'air extérieur, de sorte qu'une surpression dans une réserve de liquide entraîne un flux de gaz vers une réserve de liquide ayant une pression moindre à travers une conduite de passage de gaz. En outre, les conduites de passage de gaz sont situées dans la partie supérieure des réserves de liquide. Les conduites de passage de gaz peuvent être parallèles aux tubes de liaison. Le parallélisme permet de limiter l'encombrement du système de stabilisation. Alternativement, les conduites de passage de gaz peuvent relier les réserves de liquide de manière différente que les tubes de liaison. Par exemple, lorsque les tubes de liaison forment une étoile, les conduites de passage de gaz peuvent former un polygone, et inversement, lorsque les tubes de liaison forment un polygone, les conduites de passage de gaz peuvent former une étoile.

Selon une caractéristique, les conduites de passage de gaz peuvent comprendre des moyens de restriction du passage du gaz. Les moyens de restriction du passage du gaz permettent de limiter le flux de gaz d'une réserve de liquide à une autre. Ces moyens de restriction du passage du liquide peuvent être passifs ou actifs. Les moyens de restriction actifs n'ont pas pour but d'entraîner le déplacement du gaz, mais, au contraire, les moyens de restriction actifs ont uniquement pour but d'entraver/limiter partiellement la circulation libre du gaz. Les moyens de restriction actifs permettent d'améliorer les performances d'amortissement. Les moyens de restriction du passage du gaz peuvent être formés par exemple par une réduction du diamètre du tube localement, par une vanne, des pompes, ou des compresseurs. Le réglage de cette restriction permet de régler certaines caractéristiques liées à l'amortissement du système de stabilisation.

En outre, au moins une réserve de liquide comporte une connexion avec le milieu extérieur, permettant le passage de l'air du milieu extérieur à la partie supérieure de la réserve de liquide et inversement. Ainsi, une surpression dans une réserve de liquide engendre un flux de gaz vers l'extérieur. Cette connexion peut être une restriction. Le réglage de cette surpression permet de régler certaines caractéristiques liées à l'amortissement du système de stabilisation.

Les dimensions des tubes de liaison et des réserves de liquide dépendent de la dimension du support flottant. On peut chercher à éloigner les réserve d'eau au maximum dans le support flottant, et les tubes de liaison sont adaptés en fonction. Par exemple pour une barge circulaire de diamètre 36m, et dans une configuration polygone triangle, on peut utiliser des tubes de liaison de 30m de long environ, de diamètre 1,5m, des réserves de 5 à 10m de haut et de diamètre 3m. Typiquement on peut utiliser une masse totale de liquide (contenu dans les réserves de liquide et les tubes de liaison) de l'ordre de 5 à 15% de la masse du support flottant. Le concept fonctionne cependant à toutes les échelles.

Selon un mode de réalisation, le système de stabilisation comporte un nombre égal de réserves de liquide et de tubes de liaison. Alternativement, la différence entre le nombre de réserves de liquide et le nombre de tubes de liaison peut être égale à un. Cette égalité ou quasi-égalité permet d'assurer que toutes les réserves de liquide soient reliées entre elles par des tubes de liaison. Toutefois, le système de stabilisation avec un plus grand nombre de tubes de liaison peut permettre d'amortir simultanément plusieurs composantes du mouvement de la houle (typiquement une rotation et une translation) avec un seul système de stabilisation, en augmentant le nombre de fréquences propres du système de stabilisation.

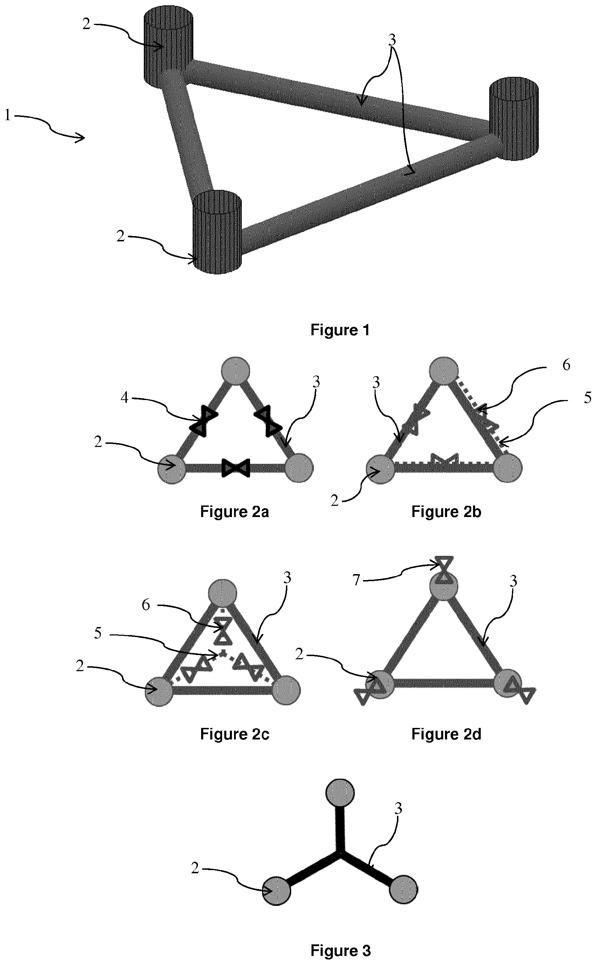

La figure 1 représente, de manière schématique et non limitative, un système de stabilisation selon un premier mode de réalisation de l'invention. Le système de stabilisation 1 est formé de trois réserves de liquide 2 et de trois tubes de liaison 3. Les centres des réserves de liquide 2 sont disposés sur deux droites distinctes, en d'autres termes : les réserves de liquide 2 ne sont pas disposées dans un unique plan, elles sont réparties spatialement. Les réserves de liquide 2 ont une forme sensiblement cylindrique. Chaque tube de liaison 3 relie deux réserves de liquide 2. Ainsi, les tubes de liaison 3 forment un triangle. Dans le cas illustré, il s'agit d'un triangle équilatéral. Les tubes de liaison 3 sont situés dans la partie inférieure des réserves de liquide 2. Cette disposition est adaptée à un support flottant du type tri-flotteur, pour lequel chaque flotteur comporte une réserve de liquide 2. Cette variante de réalisation est également adaptée à un support flottant comprenant un unique flotteur, cet unique flotteur comprenant l'ensemble du système de stabilisation.

Les figures 2a à 2d représentent, de manière schématique en vue de dessus, et de manière non limitative, quatre variantes du premier mode de réalisation, c'est-à-dire avec trois réserves de liquide reliées en triangle.

Le système de stabilisation, selon la variante de réalisation de la figure 2a, comporte en plus des éléments illustrés sur la figure 1, des moyens de restriction de passage du liquide 4. Les moyens de restriction de passage du liquide 4 sont placés sur chaque tube de liaison 3. Ils permettent de réduire le flux de liquide passant dans les tubes de liaison 3.

Le système de stabilisation, selon la variante de réalisation de la figure 2b, comporte en plus des éléments illustrés sur la figure 1, des conduites de passage du gaz 5 (en traits pointillés) et des moyens de restriction du passage du gaz 6. Les conduites de passage du gaz 5 relient la partie supérieure des réserves de liquide 2 pour le passage de gaz d'une réserve de liquide à une autre. Pour cette variante, les conduites de passage du gaz 5 sont parallèles aux tubes de liaison 3, et forment ainsi un triangle. En outre, chaque conduite de passage du gaz 5 comporte des moyens de restriction du passage du gaz 6. Ils permettent de limiter le flux de gaz entre les réserves de liquide 2. Toutefois, ces moyens de restriction du passage du gaz 6 sont facultatifs.

Le système de stabilisation, selon la variante de réalisation de la figure 2c, comporte en plus des éléments illustrés sur la figure 1, des conduites de passage du gaz 5 (en traits pointillés) et des moyens de restriction du passage du gaz 6. Les conduites de passage du gaz 5 relient la partie supérieure des réserves de liquide 2 pour le passage de gaz d'une réserve de liquide à une autre. Pour cette variante, les conduites de passage du gaz 5 ne sont pas parallèles aux tubes de liaison 3, et forment une étoile en se rejoignant au centre du triangle formé par les tubes de liaison 3. En outre, chaque conduite de passage du gaz 5 comporte des moyens de restriction du passage du gaz 6. Ils permettent de limiter le flux de gaz entre les réserves de liquide 2. Toutefois, ces moyens de restriction du passage du gaz 6 sont facultatifs.

Le système de stabilisation, selon la variante de réalisation de la figure 2d, comporte en plus des éléments illustrés sur la figure 1, des connexions 7 avec le milieu extérieur. Les connexions 7, sous forme de restriction, permettent le passage du gaz du milieu extérieur dans la partie supérieure des réserves de liquide 2 et inversement. Cette variante peut comprendre en outre des conduites de passage du gaz (non représentées).

Ces variantes de réalisation peuvent être combinées entre elles ; notamment, les systèmes de stabilisation des variantes de réalisation des figures 2b à 2d peuvent comprendre des moyens de restriction du passage du liquide, tels qu'illustrés en figure 2a...

La figure 3 représente, de manière schématique en vue de dessus, et de manière non limitative, un système de stabilisation selon un deuxième mode de réalisation de l'invention. Le système de stabilisation 1 est formé de trois réserves de liquide 2 et de trois tubes de liaison 3. Les centres des réserves de liquide 2 sont disposés sur deux droites distinctes, en d'autres termes : les réserves de liquide 2 ne sont pas disposées dans un unique plan, elles sont réparties spatialement. Les réserves de liquide 2 ont une forme sensiblement cylindrique. Chaque tube de liaison 3 relie une réserve de liquide 2 et deux autres tubes de liaison 3. Ainsi, les tubes de liaison 3 forment une étoile à trois branches. Les tubes de liaison 3 sont situés dans la partie inférieure des réserves de liquide. Cette disposition est adaptée à un support flottant du type tri-flotteur, pour lequel chaque flotteur comporte une réserve de liquide 2. Cette variante de réalisation est également adaptée à un support flottant comprenant un unique flotteur, cet unique flotteur comprenant l'ensemble du système de stabilisation.

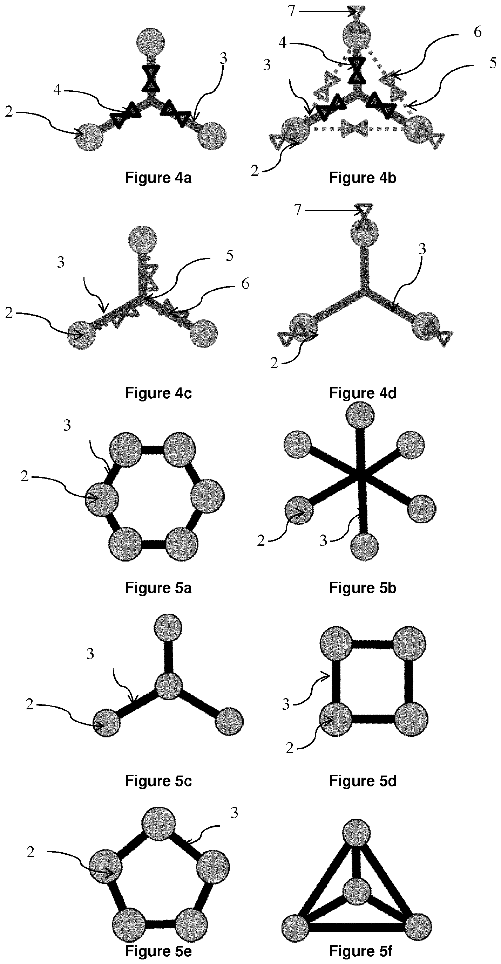

Les figures 4a à 4d représentent, de manière schématique en vue de dessus, et de manière non limitative, quatre variantes du deuxième mode de réalisation, c'est-à-dire avec trois réserves de liquide reliées en étoile.

Le système de stabilisation, selon la variante de réalisation de la figure 4a, comporte en plus des éléments illustrés sur la figure 3, des moyens de restriction de passage du liquide 4. Les moyens de restriction de passage du liquide 4 sont placés sur chaque tube de liaison 3. Ils permettent de réduire le flux de liquide passant dans les tubes de liaison 3.

Le système de stabilisation, selon la variante de réalisation de la figure 4b, comporte en plus des éléments illustrés sur la figure 3, des moyens de restriction du passage du liquide, des conduites de passage du gaz 5 (en traits pointillés), des moyens de restriction du passage du gaz 6 et des connexions 7 avec le milieu extérieur. Les moyens de restriction de passage du liquide 4 sont placés sur chaque tube de liaison 3. Ils permettent de réduire le flux de liquide passant dans les tubes de liaison 3. Les conduites de passage du gaz 5 relient la partie supérieure des réserves de liquide 2 pour le passage de gaz d'une réserve de liquide 2 à une autre. Pour cette variante, les conduites de passage du gaz 5 ne sont pas parallèles aux tubes de liaison 3, et forment ainsi un triangle. En outre, chaque conduite de passage du gaz 5 comporte des moyens de restriction du passage du gaz 6. Ils permettent de limiter le flux de gaz entre les réserves de liquide 2. Toutefois, ces moyens de restriction du passage du gaz 6 sont facultatifs. De plus, Les connexions 7, sous forme de restriction, permettent le passage du gaz du milieu extérieur dans la partie supérieure des réserves de liquide 2 et inversement.

Le système de stabilisation, selon la variante de réalisation de la figure 4c, comporte en plus des éléments illustrés sur la figure 3, des conduites de passage du gaz 5 (en traits pointillés) et des moyens de restriction du passage du gaz 6. Les conduites de passage du gaz 5 relient la partie supérieure des réserves de liquide 2 pour le passage de gaz d'une réserve de liquide à une autre. Pour cette variante, les conduites de passage du gaz 5 sont parallèles aux tubes de liaison 3, et forment ainsi une étoile. En outre, chaque conduite de passage du gaz 5 comporte des moyens de restriction du passage du gaz 6. Ils permettent de limiter le flux de gaz entre les réserves de liquide 2. Toutefois, ces moyens de restriction du passage du gaz 6 sont facultatifs.

Le système de stabilisation, selon la variante de réalisation de la figure 4d, comporte en plus des éléments illustrés sur la figure 3, des connexions 7 avec le milieu extérieur. Les connexions 7, sous forme de restriction, permettent le passage du gaz du milieu extérieur dans la partie supérieure des réserves de liquide 2 et inversement. Cette variante peut comprendre en outre des conduites de passage du gaz (non représentées).

Ces variantes de réalisation peuvent être combinées entre elles ; notamment, les systèmes de stabilisation des variantes de réalisation des figures 4c et 4d peuvent comprendre des moyens de restriction du passage du liquide... En outre, chaque variante de réalisation des figures 4a à 4d peut comprendre une réserve de liquide au centre de l'étoile.

Les figures 5a à 5f illustrent, en vue de dessus, et de manière non limitative, d'autres modes de réalisation du système de stabilisation selon l'invention. Sur ces figures, seuls les éléments principaux, ont été représentés. Néanmoins, ces modes de réalisation sont compatibles avec l'utilisation de conduites de passage du gaz, de moyens de restriction du passage du liquide, de moyens de restriction du passage du gaz, de connexions avec le milieu extérieur...

Le système de stabilisation, selon le mode de réalisation de la figure 5a, comporte six réserves de liquide 2 et six tubes de liaison 3. Les centres des réserves de liquide sont disposés sur trois droites distinctes, en d'autres termes : les réserves de liquide 2 ne sont pas disposées dans un unique plan, elles sont réparties spatialement. Les réserves de liquide 2 ont une forme sensiblement cylindrique. Chaque tube de liaison 3 relie deux réserves de liquide 2. Ainsi, les tubes de liaison 3 forment un hexagone. Dans le cas illustré, il s'agit d'un hexagone régulier. Les tubes de liaison 3 sont situés dans la partie inférieure des réserves de liquide. Cette disposition est adaptée à un support flottant du type hexa-flotteurs, pour lequel chaque flotteur comporte une réserve de liquide 2. Cette variante de réalisation est également adaptée à un support flottant comprenant un unique flotteur, cet unique flotteur comprenant l'ensemble du système de stabilisation.

La figure 5b représente, de manière schématique en vue de dessus, et de manière non limitative, un système de stabilisation selon un autre mode de réalisation de l'invention. Le système de stabilisation 1 est formé de six réserves de liquide 2 et de six tubes de liaison 3. Les centres des réserves de liquide 2 sont disposés sur trois droites distinctes, en d'autres termes : les réserves de liquide 2 ne sont pas disposées dans un unique plan, elles sont réparties spatialement. Les réserves de liquide 2 ont une forme sensiblement cylindrique. Chaque tube de liaison 3 relie une réserve de liquide 3 et les autres tubes de liaison 2. Ainsi, les tubes de liaison 3 forment une étoile à six branches. Les tubes de liaison 3 sont situés dans la partie inférieure des réserves de liquide.

Cette disposition est adaptée à un support flottant du type hexa-flotteurs, pour lequel chaque flotteur comporte une réserve de liquide 2. Cette variante de réalisation est également adaptée à un support flottant comprenant un unique flotteur, cet unique flotteur comprenant l'ensemble du système de stabilisation. Ce mode de réalisation peut comporter de manière facultative une réserve de liquide au centre de l'étoile (non représentée).

La figure 5c représente, de manière schématique en vue de dessus, et de manière non limitative, un système de stabilisation selon un autre mode de réalisation de l'invention. Le système de stabilisation 1 est formé de quatre réserves de liquide 2 et de trois tubes de liaison 3. Les centres des réserves de liquide 2 sont disposés sur deux droites distinctes, en d'autres termes : les réserves de liquide 2 ne sont pas disposées dans un unique plan, elles sont réparties spatialement. Les réserves de liquide 2 ont une forme sensiblement cylindrique. Chaque tube de liaison 3 relie une réserve de liquide 3 à une autre réserve de liquide. Ainsi, les tubes de liaison 3 forment une étoile à trois branches et comporte une réserve de liquide centrale (au centre de l'étoile). Les tubes de liaison 3 sont situés dans la partie inférieure des réserves de liquide. Cette disposition est adaptée à un support flottant du type tri-flotteurs, pour lequel chaque flotteur comporte une réserve de liquide 2. Cette variante de réalisation est également adaptée à un support flottant comprenant un unique flotteur, cet unique flotteur comprenant l'ensemble du système de stabilisation.

Le système de stabilisation, selon le mode de réalisation de la figure 5d, comporte quatre réserves de liquide 2 et quatre tubes de liaison 3. Les réserves de liquide 2 ne sont pas disposées dans un unique plan, elles sont réparties spatialement. Les centres des réserves de liquide 2 sont disposés sur deux droites distinctes, en d'autres termes : les réserves de liquide 2 ont une forme sensiblement cylindrique. Chaque tube de liaison 3 relie deux réserves de liquide 2. Ainsi, les tubes de liaison 3 forment un quadrilatère. Dans le cas illustré, il s'agit d'un carré. Les tubes de liaison 3 sont situés dans la partie inférieure des réserves de liquide. Cette disposition est adaptée à un support flottant du type quadri-flotteurs, pour lequel chaque flotteur comporte une réserve de liquide 2. Cette variante de réalisation est également adaptée à un support flottant comprenant un unique flotteur, cet unique flotteur comprenant l'ensemble du système de stabilisation.

Le système de stabilisation, selon le mode de réalisation de la figure 5e, comporte cinq réserves de liquide 2 et cinq tubes de liaison 3. Les centres des réserves de liquide 2 sont disposés sur trois droites distinctes, en d'autres termes : les réserves de liquide 2 ne sont pas disposées dans un unique plan, elles sont réparties spatialement. Les réserves de liquide 2 ont une forme sensiblement cylindrique. Chaque tube de liaison 3 relie deux réserves de liquide 2. Ainsi, les tubes de liaison 3 forment un pentagone. Dans le cas illustré, il s'agit d'un pentagone régulier. Les tubes de liaison 3 sont situés dans la partie inférieure des réserves de liquide. Cette disposition est adaptée à un support flottant du type penta-flotteurs, pour lequel chaque flotteur comporte une réserve de liquide 2. Cette variante de réalisation est également adaptée à un support flottant comprenant un unique flotteur, cet unique flotteur comprenant l'ensemble du système de stabilisation.

Le système de stabilisation, selon le mode de réalisation de la figure 5f, comporte quatre réserves de liquide 2 et six tubes de liaison 3. Les centres des réserves de liquide sont disposés sur deux droites distinctes, en d'autres termes : les réserves de liquide 2 ne sont pas disposées dans un unique plan, elles sont réparties spatialement. Les réserves de liquide 2 ont une forme sensiblement cylindrique. Chaque tube de liaison 3 relie deux réserves de liquide 2. Pour cette réalisation, les tubes de liaison 3 forment une étoile et un triangle, en particulier un triangle équilatéral, avec une réserve de liquide 2 disposé au centre du triangle. Les tubes de liaison 3 sont situés dans la partie inférieure des réserves de liquide. Cette disposition est adaptée à un support flottant du type quadri-flotteurs, pour lequel chaque flotteur comporte une réserve de liquide 2. Cette variante de réalisation est également adaptée à un support flottant comprenant un unique flotteur, cet unique flotteur comprenant l'ensemble du système de stabilisation. Au moyen de cette conception, il est possible d'amortir deux composantes du mouvement de la houle simultanément (typiquement une rotation et une translation) avec un seul système d'amortissement (cela est possible car on augmente le nombre de fréquences propres).

Le système de stabilisation permet d'amortir le mouvement multidirectionnel de la houle pour le support flottant.

Le support flottant peut avoir un unique flotteur ayant une forme sensiblement cylindrique, par exemple comme décrit dans la demande de brevet FR 2998338. Dans ce cas, le système de stabilisation peut être inclus dans l'unique flotteur.

Alternativement, le support flottant peut comprendre une pluralité de flotteurs reliés entre eux. Il peut être notamment du type tri-flotteur, comme décrit dans la demande de brevet FR 2990005 (US 2015-0071779). Cette conception avec plusieurs flotteurs possède, en général, un faible déplacement, et présente une inertie de la surface de flottaison importante, leur procurant ainsi un couple de redressement suffisant à leur stabilité. De plus, ce type de flotteur est moins sensible à la houle que les barges. En cas de pluralité de flotteurs, chaque flotteur peut comprendre une réserve de liquide du système de stabilisation, les tubes de liaison du système de stabilisation relient alors les différents flotteurs entre eux et peuvent être supportés par la structure du support flottant multi-flotteurs.

Ces supports flottants peuvent être ancrés au sol marin par des lignes d'ancrage tendues, semi-tendues ou des lignes d'ancrage caténaires.

La présente invention concerne également une installation d'éolienne sur une étendue d'eau (mer par exemple). L'installation comprend une éolienne à axe vertical ou à axe horizontal, et un support flottant selon l'une quelconque des combinaisons de variantes décrites précédemment. Le support flottant a pour but d'apporter la flottabilité et la stabilité de l'éolienne, de manière à reprendre les efforts exercés sur celle-ci, tout en limitant les mouvements de l'ensemble. Le support flottant selon l'invention est particulièrement adapté à l'installation d'une éolienne offshore (en mer), afin de permettre l'amortissement de la houle et la stabilité de l'éolienne.

Le support flottant selon l'invention peut être également utilisé dans d'autres domaines que l'installation d'éolienne offshore (en mer), par exemple pour des moyens de production d'hydrocarbures, des systèmes houlomoteurs (convertisseur de l'énergie de la houle en énergie mécanique ou électrique), mais également dans le génie civil, par exemple pour des gratte-ciels ou des ponts...

Exemple

Pour évaluer les performances d'un support flottant (flotteur) muni d'un système de stabilisation selon l'invention, on peut décrire d'une part les interactions entre celui-ci et le flotteur et, d'autre part, les interactions entre le flotteur et la houle. On utilise une approche Lagrangienne pour obtenir les équations du mouvement, dont la forme générale est donnée par

$$\frac{d}{dt}\frac{\partial L}{\partial \dot{q}_k} - \frac{\partial L}{\partial q_k} = Q_k$$

où L est le Langrangien du système constitué du flotteur et du système de stabilisation, $q_k$ les paramètres du système et $Q_k$ les forces généralisées.

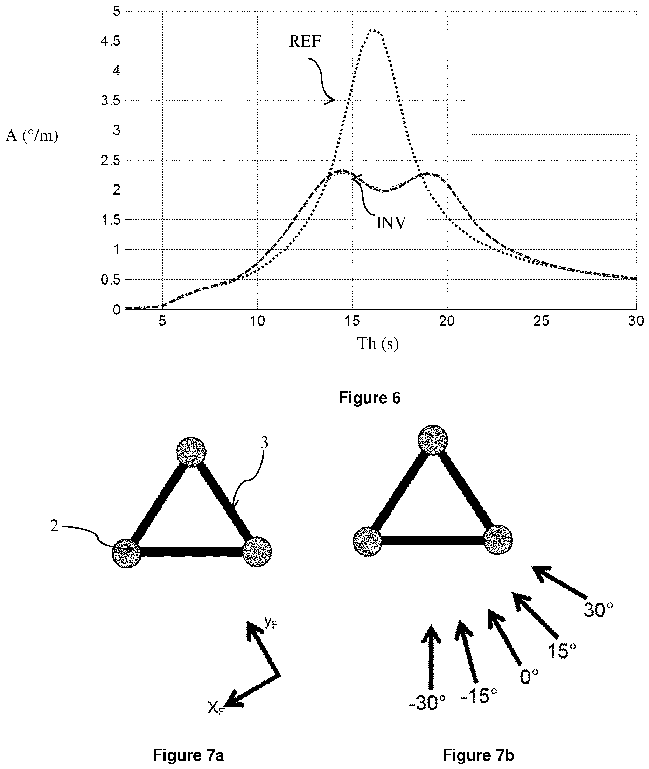

Par cet exemple, on montre le caractère multidirectionnel du système de stabilisation selon l'invention. Pour cela, on évalue la réponse d'un flotteur muni d'un système de stabilisation selon l'invention comme illustré dans la figure 1, pour différents angles d'incidence de la houle. On associe un repère local à chaque angle d'incidence, comme défini dans la figure 7a. Quel que soit l'angle d'incidence, les mouvements du flotteur sont évalués dans le repère local de la houle incidente (donc de l'excitation), notamment en terme d'amplitude de mouvement angulaire selon la direction perpendiculaire à la vague incidente (selon $x_F$).

Les résultats sont donnés en figure 6 en utilisant la barge MIT comme flotteur (tel que décrit dans le document : J. M. Jonkman, Dynamics modeling and loads analysis of an offshore floating wind turbine, PhD Thesis NREL/TP-500-41958, National Renewable Energy Laboratory, Nov 2007). La figure 6 comprend des courbes du ratio A (°/m) de l'amplitude angulaire par rapport à la hauteur de la houle en fonction de la période de la houle Th (s). Ce flotteur étant circulaire, par symétrie, sa réponse sans dispositif d'amortissement, c'est-à-dire selon l'art antérieur, est identique quel que soit l'angle d'incidence. Cette réponse est donnée par la courbe REF. Pour évaluer la sensibilité de la réponse du flotteur muni du système de stabilisation selon l'invention, à l'angle d'incidence de la houle, on a fait varier cet angle par intervalle de 15° entre -30° et +30° (cf. figure 7b). Le support selon l'invention « en triangle équilatéral » étant lui-même invariant par rotation de 120° et symétrique, ce balayage de 60° est équivalent à un balayage de 360° de l'angle de d'incidence. Les courbes (une pour chaque angle d'incidence de la houle) obtenues pour le système selon l'invention sont notées INV. Ces courbes sont quasiment confondues. Par rapport à la référence REF selon l'art antérieur, l'utilisation du système de stabilisation selon l'invention INV permet une réduction très significative (environ 50 %) de l'amplitude du mouvement sur une large gamme de périodes d'excitation, tout comme c'est le cas pour une barge munie d'un simple « tube en U » disposé dans le plan d'incidence de la houle. De plus, par la superposition des courbes, on constate une sensibilité extrêmement faible à l'angle d'incidence. On peut donc dire que le système de stabilisation selon l'invention a un caractère multidirectionnel pour l'amortissement. A contrario, un système à « tube en U » simple ne permet aucun amortissement pour une houle dont l'angle d'incidence est perpendiculaire à l'axe du « tube en U ».

**Revendications**

1. Support flottant comprenant au moins un flotteur et un système de stabilisation, comprenant au moins trois réserves de liquide (2) et au moins trois tubes de liaison (3), lesdites réserves de liquide (2) étant réparties de telle sorte que, en vue de dessus, les centres desdites réserves de liquide (2) sont disposés sur au moins deux droites distinctes, et lesdits tubes de liaison (3) reliant lesdites réserves de liquide (2) pour une circulation libre dudit liquide entre lesdites réserves de liquide (2), lesdits tubes de liaison (3) relient toutes lesdites réserves de liquide (2) entre elles, au moins un desdits tubes de liaison (3) comporte des moyens de restriction actifs (4) de passage dudit liquide permettant d'entraver/limiter partiellement la circulation libre du liquide, lesdits tubes de liaison (3) sont agencés au niveau de la partie inférieure desdites réserves de liquide (2), lesdites réserves dudit liquide (2) comportent un gaz (5) dans leurs parties supérieures et au moins une conduite de passage dudit gaz (5) relie au moins deux réserves de liquide (2). et au moins une réserve de liquide (2) comporte une connexion (7) avec un gaz du milieu extérieur.

2. Support flottant selon la revendication 1, dans lequel lesdits tubes de liaison (3) forment une étoile ou un polygone, de préférence un polygone régulier, les sommets de ladite étoile ou dudit polygone étant formés par lesdites réserves de liquide (2), et les arrêtes de ladite étoile ou dudit polygone étant formées par lesdits tubes de liaison (3).

3. Support flottant selon la revendication 2, dans lequel ledit système de stabilisation (1) comporte une réserve de liquide (2) au centre de ladite étoile ou dudit polygone.

4. Support flottant selon l'une des revendications précédentes, dans lequel lesdites conduites de passage du gaz (5) sont parallèles auxdits tubes de liaison (3).

5. Support flottant selon l'une des revendications précédentes, dans lequel au moins une conduite de passage de gaz (5) comporte des moyens de restriction du passage du gaz (6).

6. Support flottant selon l'une des revendications précédentes, dans lequel lesdites réserves de liquide (2) ont sensiblement une forme cylindrique.

7. Support flottant selon l'une des revendications précédentes, dans lequel ledit système de stabilisation (1) comporte entre trois et huit réserves de liquide (2).

8. Support flottant selon l'une des revendications précédentes, dans lequel lesdits tubes de liaison (3) sont sensiblement horizontaux.

9. Support flottant selon l'une des revendications précédentes, dans lequel ledit support flottant comporte au moins trois flotteurs, chaque flotteur comportant une réserve de liquide (2) dudit système de stabilisation (1).

10. Système de production d'énergie en mer, comportant une éolienne et un support flottant selon l'une des revendications 1 à 9.

**Patentansprüche**

1. Schwimmender Träger umfassend wenigstens einen Schwimmer und ein Stabilisierungssystem, das wenigstens drei Flüssigkeitsreserven (2) und wenigstens drei Verbindungsrohre (3) umfasst, wobei die Flüssigkeitsreserven (2) so verteilt sind, dass in Draufsicht die Mittelpunkte der Flüssigkeitsreserven (2) auf wenigstens zwei gesonderten Geraden angeordnet sind, und die Verbindungsrohre (3) die Flüssigkeitsreserven (2) für eine freie Zirkulation der Flüssigkeit zwischen den Flüssigkeitsreserven (2) verbinden, die Verbindungsrohre (3) alle Flüssigkeitsreserven (2) miteinander verbinden, wenigstens eins der Verbindungsrohre (3) aktive Mittel zur Durchlassbeschränkung (4) der Flüssigkeit aufweist, mit denen die freie Zirkulation der Flüssigkeit teilweise gehemmt/begrenzt werden kann, die Verbindungsrohre (3) am unteren Abschnitt der Flüssigkeitsreserven (2) angeordnet sind, die Flüssigkeitsreserven (2) ein Gas (5) in ihren oberen Abschnitten aufweisen und wenigstens eine Leitung zum Durchlass des Gases (5) wenigstens zwei Flüssigkeitsreserven (2) verbindet, und wenigstens eine Flüssigkeitsreserve (2) eine Verbindung (7) mit einem Gas des Umgebungsmilieus aufweist.

2. Schwimmender Träger nach Anspruch 1, wobei die Verbindungsrohre (3) einen Stern oder ein Vieleck bilden, vorzugsweise ein regelmäßiges Vieleck, wobei die Eckpunkte des Sterns oder Vielecks von den Flüssigkeitsreserven (2) gebildet sind und die Kanten des Sterns oder Vielecks von den Verbindungsrohren (3) gebildet sind.

3. Schwimmender Träger nach Anspruch 2, wobei das Stabilisierungssystem (1) eine Flüssigkeitsreserve (2) in der Mitte des Sterns oder Vielecks aufweist.

4. Schwimmender Träger nach einem der vorhergehenden Ansprüche, wobei die Leitungen zum Durchlass des Gases (5) parallel zu den Verbindungsrohren (3) verlaufen.

5. Schwimmender Träger nach einem der vorhergehenden Ansprüche, wobei wenigstens eine Gasdurchlassleitung (5) Mittel zur Beschränkung des Durchlasses des Gases (6) aufweist.

6. Schwimmender Träger nach einem der vorhergehenden Ansprüche, wobei die Flüssigkeitsreserven (2) eine im Wesentlichen zylindrische Form aufweisen.

7. Schwimmender Träger nach einem der vorhergehenden Ansprüche, wobei das Stabilisierungssystem (1) zwischen drei und acht Flüssigkeitsreserven (2) aufweist.

8. Schwimmender Träger nach einem der vorhergehenden Ansprüche, wobei die Verbindungsrohre (3) im Wesentlichen horizontal verlaufen.

9. Schwimmender Träger nach einem der vorhergehenden Ansprüche, wobei der schwimmende Träger wenigstens drei Schwimmer aufweist, wobei jeder Schwimmer eine Flüssigkeitsreserve (2) des Stabilisierungssystems (1) aufweist.

10. Offshore-Energieerzeugungssystem aufweisend eine Windenergieanlage und einen schwimmenden Träger nach einem der Ansprüche 1 bis 9.

**Claims**

1.  Floating support comprising at least one float and a stabilizing system, comprising at least three liquid reserves (2) and at least three connection tubes (3), said liquid reserves (2) being distributed in such a way that, in plan view, the centres of said liquid reserves (2) are arranged on at least two separate straight lines, and said connection tubes (3) connecting said liquid reserves (2) for free circulation of said liquid between said liquid reserves (2), said connection tubes (3) connect all of said liquid reserves (2) to one another, at least one of said connection tubes (3) comprises active restriction means (4) for restricting the passage of said liquid that make it possible to partially hinder/limit the free circulation of the liquid, said connection tubes (3) are arranged at the lower part of said liquid reserves (2), said reserves (2) of said liquid comprise a gas (5) in their upper parts and at least one pipe for passage of said gas (5) connects at least two liquid reserves (2), and at least one liquid reserve (2) comprises a connection (7) with a gas from the external environment.

2.  Floating support according to Claim 1, wherein said connection tubes (3) form a star or a polygon, preferably a regular polygon, the apexes of said star or of said polygon being formed by said liquid reserves (2), and the edges of said star or of said polygon being formed by said connection tubes (3).

3.  Floating support according to Claim 2, wherein said stabilizing system (1) comprises a liquid reserve (2) at the centre of said star or of said polygon.

4.  Floating support according to one of the preceding claims, wherein said pipes for passage of the gas (5) are parallel to said connection tubes (3).

5.  Floating support according to one of the preceding claims, wherein at least one gas passage pipe (5) comprises means (6) for restricting the passage of the gas.

6.  Floating support according to one of the preceding claims, wherein said liquid reserves (2) have substantially a cylindrical shape.

7.  Floating support according to one of the preceding claims, wherein said stabilizing system (1) comprises between three and eight liquid reserves (2) .

8.  Floating support according to one of the preceding claims, wherein said connection tubes (3) are substantially horizontal.

9.  Floating support according to one of the preceding claims, wherein said floating support comprises at least three floats, each float comprising a liquid reserve (2) of said stabilizing system (1).

10. Offshore energy production system, comprising a wind turbine and a floating support according to one of Claims 1 to 9.

Figure 1

Figure 2a

Figure 2b

Figure 2c

Figure 2d

Figure 3

Figure 4a

Figure 4b

Figure 4c

Figure 4d

Figure 5a

Figure 5b

Figure 5c

Figure 5d

Figure 5e

Figure 5f

Figure 6

Figure 7a

Figure 7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014339828 A1
- WO 2015048147 A1
- NL 280007
- FR 2998338
- FR 2990005
- US 20150071779 A

**Littérature non-brevet citée dans la description**

- Dynamics modeling and loads analysis of an offshore floating wind turbine. **J. M. JONKMAN.** PhD Thesis NREL/TP-500-41958. National Renewable Energy Laboratory, Novembre 2007